Europäisches Patentamt

European Patent Office

Office européen des brevets

(11) Publication number: **0 221 442**
A2

## (12) EUROPEAN PATENT APPLICATION

(21) Application number: **86114584.5**

(22) Date of filing: **21.10.86**

(51) Int. Cl.⁴: **B 65 B 69/00**
**B 09 B 3/00**

(30) Priority: **31.10.85 IT 2267285**

(43) Date of publication of application:
**13.05.87 Bulletin 87/20**

(84) Designated Contracting States:
**DE ES FR GB IT**

(71) Applicant: BAYER ITALIA S.p.A.
Viale Certosa 126
I-20156 Milano(IT)

(72) Inventor: Nicoli, Adriano
Via Mascagni 1
Seriate (Bergamo)(IT)

(74) Representative: Ehrenstein, Wolfgang et al,
Bayer AG Konzernverwaltung RP Patentabteilung
D-5090 Leverkusen, Bayerwerk(DE)

(54) Semiautomatic device for discharging discarded aerosol tins, by vertical introduction of the tins in the device.

(57) In the device to discharge discarded aerosol bottles these are introduced vertically, upside down, into the conical mouth (16) of a body (14) apt to slide vertically in seal tight relation into the opening (12) of an air tight chamber (4) in which is fitted a perforating punch (32). The discarded bottle after being positioned by a centering device (36-38), is pressed downward by means of a piston (42-44) against the punch and thus emptied of its content.

The active liquid is collected through a discharge (8) and the propelling gas through a side opening (9). At the end of the operation body (14) and the emptied bottle are pushed upward by the action of a spring (28) which rests on the base of body (14).

EP 0 221 442 A2

Semiautomatic device for discharging discarded aerosol tins, by vertical introduction of the tins in the device

---

## DESCRIPTION

This invention relates to an automatic device to discharge discarded aerosol tins by introducting and arranging the tins vertically in said device.

In the plants for filling aerosol tins with the relevant active liquid and propelling compressed gas, also in the liquid state, a certain number of tins have to be discarded in the course of production as they are only partially charged.

The recovery of the contents of these tins must in any case be carried out with same precaution, as it involves containers under pressure, containing as far as the propellant is concerned, a gas which is at least irritating.

The purpose of this invention is to provide a semiautomatic device apt to perforate the discarded aerosol tins, to completely and quickly recover both the propellant gas and the active liquid, all within the safety rules prescribed.

The device according to the invention is characterized by means for retaining and centering the tins in the vertical position coaxial to a vertical mobile body within the opening of an air tight chamber apt to collect the active liquid and the propellant gas con

Le A 24 744-Foreign countries

tained in the tins themselves and further characterized by perforating means for the tins, by thrust means to produce the relative movement between the tins and the perforating means and moreover, by safety means to shield the operator arranged on the work plane of the supporting frame of the device.

The invention will be be described with reference to the annexed drawings which illustrate, in succession and schematically, the different phases of perforation of a discarded tin.

Specifically:

Fig. 1 illustrates the device according to the invention at the start of its operating cycle, coinciding with the introduction of the tin into the opening of the device itself.

Fig. 2 illustrates the second phase of the cycle in which the tin is positioned vertically.

Fig. 3 shows the last phase of the cycle in which the tin is pressed downwards toward the perforating point.

In the drawings, the device, which is globably identified by Number 1 consists of a framework 2 made of metal sections having a working surface 3 to which is secured and air tight chamber 4 formed by lateral walls 6, by a bottom 8 with walls inclined downward converging toward a drain plug 8. One of the lateral walls of chamber 4 is equipped with a opening 9, while the top wall 10 has a cylindrical opening 12 projecting on the working plane to allow the introduction of the tins to be discharged.

A shaped body 14 apt to slide vertically and operating within a hollow cylinder 15 can move freely within said cylindrical opening.

Body 14 is provided with a frustum conical shaped mouth 16 communicating, through a channel 18 (flared in the opposite direction) with the interior of chamber 4. A plate 20 is secured to the base of body 14, said plate being supported at the end of his vertical run by columns 22. Columns 22 are secured to cross elements 24 secured in turn to pillars 26 which project from air tight supporting chamber 4 to connect with supporting structure 2 of the device.

Base 20 of body 14 rests on a coil spring 28 the opposite end of which rests in turn on a ring 30 secured to cross element 24.

A punch 32, made of tempered steel with point oriented upwardly and provided with grooves 34 is secured to the cross element 24 and is co-axial with spring 28.

A centering device 36 is fitted on work plane 3, said centering device being preferably equipped with three pneumatic pistons 38 set at 120° C and equipped with centripetal movement to maintain tin 40 aligned in the vertical position on the axis of punch 32 in conical mouth 16 of sliding body 14. A double acting pneumatically operated piston 42 is set on the same vertical axis of the tin; said piston acts, with head 44 of its cylinder on the bottom of the overturned tin, to press it downward in the vertical direction.

The body of piston 42 is sustained slidably on a support 46 secured to framework 2, with respect to which it can be adjusted in height by means of a rack and pinion handwheel device.

The working plane 3 of the framework is provided with a slidable vertical wall damper of known type (not shown) which constitutes a peripheral protective screen around the mouth piece of the device, and which is closed after introduction of the tin. The closing of the damper, via pneumatic contact limit switch provides the consent for starting operation of the device, in conformity with safety regulations.

Obviously the successive operations which will be described in sequence hereafter are governed by a timer which governs the cutting in of suitable pneumatic valves to provide the centering and perforation of the tins as will as collection of the propellant and of the active liquid.

The operation of the device is as follows:

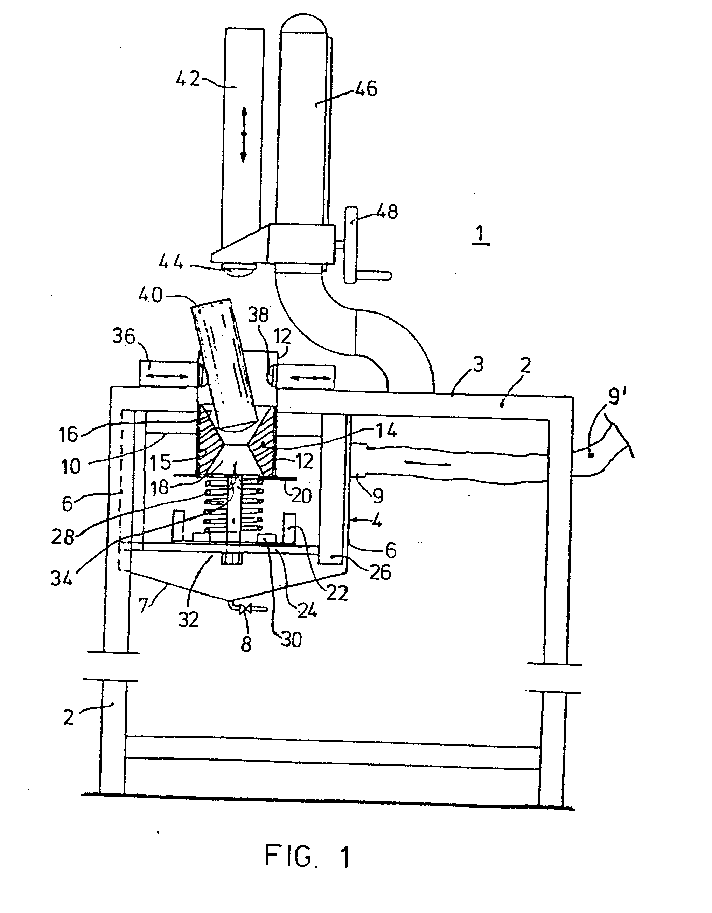

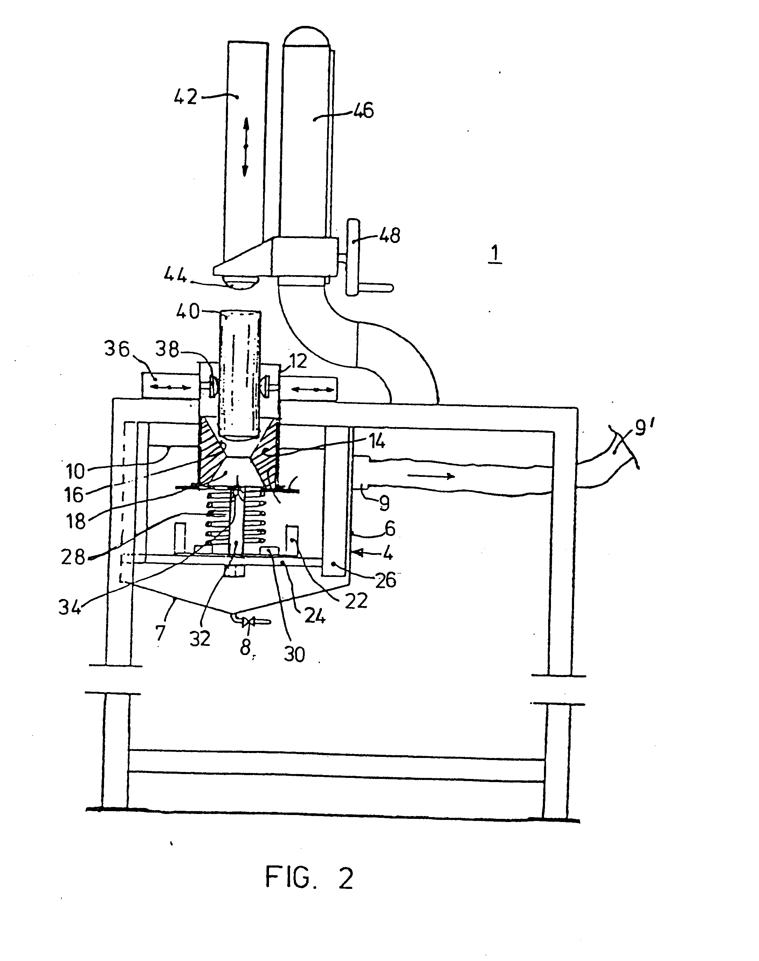

The rejected tins, after removal of the operating button with which they are fitted, are introduced manually by the operator, in an upside down position into the opening of cylinder 12 (see fig. 1). Once the safety damper is closed, the first operation of the automatic sequence provides to center the tin vertically on the mouth piece of body 14 (fig. 2) by means of pistons 38. After this, the tin is pressed downward by piston 42-44 until its edge engages with conical aperture 16 in tight seal relation; the piston continues its downward stroke in opposition to spring

Le A 24 744-Foreign countries

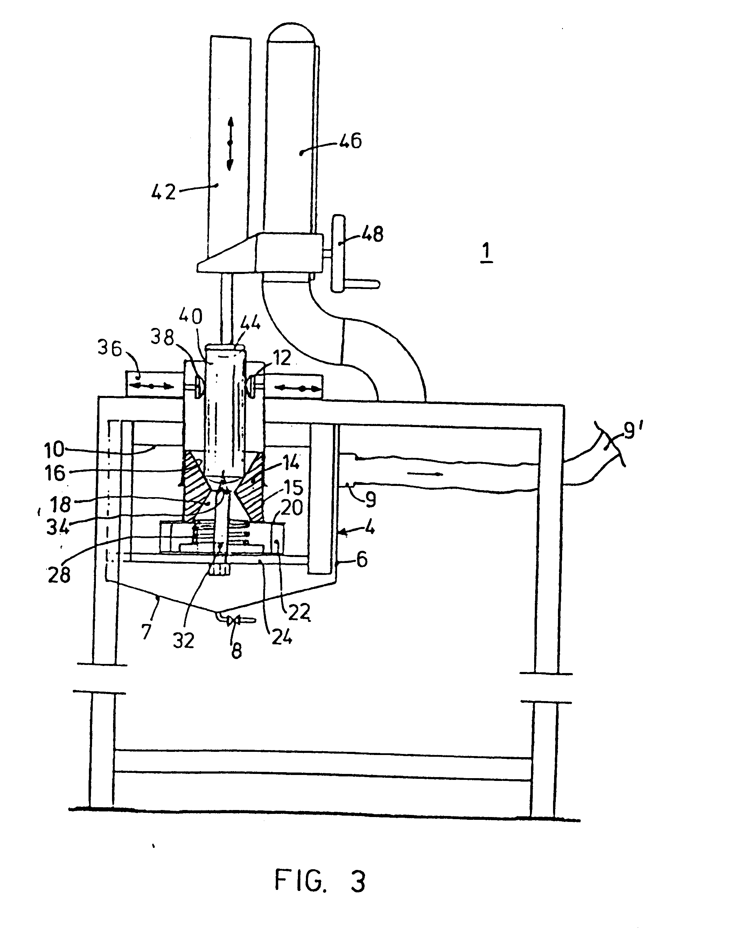

28 to press the tin and body 14 downwards until the tin meets the point of punch 32, then proceeds to its stroke limit (fig. 3) to obtain perforation of the tin. Thanks to the grooves 34 on the point of the punch, the liquids in the tin flow out easily; the propellant gasifies and is aspirated through lateral opening 9 of the chamber; the active liquid percolates to the bottom of the chamber and can flow out from valve 8, which opens intermittently after aspiration of the propellant, being governed by the timer. At this point, after a given preset time the double acting piston shifts upward allowing body 14 to lift under the action of spring 28 and along with it the emptied tin which may be removed and replaced after having opened the safety damper to initiate a new cycle as shown in Fig. 1.

The device herein described is applicable for a wide range of tin dimensions in that its conical mouth piece 16 is conceived to provide tight sealing automatically on different possible tin diameters, and this also applies to the length of the tins as piston 42 may be adjusted in height.

The operating cycle of the device is repeated at intervals of approximately 10 seconds.

The details of the device described and illustrated may in any case vary especially as to dimensions, without departing from the spirit and domain of the invention.

Le A 24 744-Foreign countries

## CLAIMS

1.    Semiautomatic device for discharging discarded aerosol tins, characterized by means (36-38) to retain and center the tins in a vertical position and co- axial with a body (14) which is vertically movable within the aperture (12) of an air tight chamber (4) apt to collect the active liquid and propellant gas contained in the tins, by a perforating element (32) for tins (40) by thrust means (42-44) to provide the reciprocal movement between the tins and said perforating device and by protective safety means for the operator set on the working plane (3) of supporting  structure (2) for said device.

2.    Device according to claim 1, characterized in that means (36-38) for retention of the tins introduced in the aperture of the device consist of at least three pneumatic type pistons (38) with centripetal movement to maintain the tins vertically centered on an axis common to moving body (14), with respect to perforating means (32) and thrust means (42-44).

3.    Device according to claims 1 and 2, characterized in that body (14) has a frustum conical shaped mouthpiece (16) narrowing from top to bottom and apt to slide air tight within a cylinder (15) constituting the aperture of air tight chamber (4).

4.  Device according to claim 3, characterized in that body (14) is provided with a base plate (20) resting on the end of a coiled spring (28), the other end of which being sustained by a frame (24) made of metal sections in the interior of the air tight chamber and secured to framework (2) of the device, while said base rests, at its downward stroke limit on opposing columns (22).

5.  Device according to claims 1 to 4, characterized in that a perforating device is secured to frame (24); where said perforating device consists of a tempered steel punch (32) the conical point of which being provided with grooves (34) to permit out flow of the active liquid and propellant from the perforated tin said punch being placed in a position which is co-axial with conical mouth piece (16) of body (14), and with compression spring (28).

6.  Device according to claims 1 to 5, characterized in that the thrusting means to urge tin (40) against punch (32) consist of a double acting pneumatic pistons (42-44) which is vertically coaxial with the mouthpiece of body (14) and with punch (32).

7.  Device according to claim 6, characterized in that the body of piston (42) is secured slidably to a vertical supporting column (46) with respect to which said body can be adjusted in height by means of a handwheel (48).

Le A 24 744-Foreign countries

8. Device according to claims from 1 to 7, characterized in that the working plane (3) of the device is provided with a safety damper which may be operated manually and fitted around aperture (12) of the device and piston (42); the closed position, after introduction of the single tins in the conical mouthpiece (16) of the device, being associated with a device to start the emptying operation of the tins.

Le A 24 744-Foreign countries

FIG. 1

FIG. 2

FIG. 3